# EUROPÄISCHE PATENTSCHRIFT

(11) **EP 2 835 031 B1**
(45) Veröffentlichungstag und Bekanntmachung des Hinweises auf die Patenterteilung: **18.08.2021**
(21) Anmeldenummer: 13721580.2
(22) Anmeldetag: 04.04.2013
(51) Int. Cl.: H05B 45/10, H02J 9/02, H05B 45/40

(54) **LED-MODUL MIT INTEGRIERTER NOTLICHTFUNKTION, BELEUCHTUNGSSYSTEM UND VERFAHREN ZUM BETREIBEN EINES LED-MODULS MIT INTEGRIERTER NOTLICHTFUNKTION**
LED MODULE WITH INTEGRATED EMERGENCY LIGHT FUNCTION, LIGHTING SYSTEM, AND METHOD FOR OPERATING AN LED MODULE WITH INTEGRATED EMERGENCY LIGHT FUNCTION
MODULE À DIODES DEL À FONCTION ÉCLAIRAGE DE SECOURS INTÉGRÉE, SYSTÈME D'ÉCLAIRAGE ET PROCÉDÉ DE FONCTIONNEMENT D'UN MODULE À DIODES DEL À FONCTION ÉCLAIRAGE DE SECOURS INTÉGRÉE

(30) Priorität: 04.04.2012 DE 102012006846; 05.04.2012 AT 1282012 U
(43) Veröffentlichungstag der Anmeldung: 11.02.2015
(73) Patentinhaber: Tridonic GmbH & Co. KG, 6851 Dornbirn (AT)
(72) Erfinder: PLATZER, Christoph, A-8332 Edelsbach (AT); KEARS, John, Witton Gilbert Durham (GB)
(74) Vertreter: Banzer, Hans-Jörg
(86) Internationale Anmeldenummer: PCT/AT2013/000057
(87) Internationale Veröffentlichungsnummer: WO 2013/149276

(56) Entgegenhaltungen:
- DE-A1-102008 016 788
- US-A1- 2008 092 800
- US-A1- 2012 126 699
- US-B1- 7 649 472

## Beschreibung

Die Erfindung betrifft eine Kombination aus einem LED-Modul mit integrierter Notlichtfunktion und wenigstens einem Betriebsgerät nach Anspruch 1 und ein Verfahren zum Betreiben eines LED-Moduls nach Anspruch 7. Vorteilhafte Ausführungsformen sind in den abhängigen Ansprüchen definiert.

LED-basierte Beleuchtungssysteme gewinnen zunehmend an Bedeutung. Deckenleuchten, die eine Mehrzahl von LEDs aufweisen, finden zunehmend Verwendung. Derartige Deckenleuchten können beispielsweise als so genannte "Downlights" ausgestaltet sein, die ein im Wesentlichen kegelförmiges Strahlungsmuster abstrahlen und ein kreisförmiges Beleuchtungsmuster generieren.

Die WO 02/45478 A1 beschreibt Informationssysteme, bei denen eine LED-basierte Vorrichtung zur Erzeugung unterschiedlicher Farben gemäß einem Informationssignal gesteuert wird. Die Steuerung kann derart erfolgen, dass zeitsequentiell in kontrollierter Weise Licht mit unterschiedlichen Farben ausgegeben wird.

Die WO 2000/024062 A1 beschreibt ein LED-Modul mit einer LED und einer schalenförmigen Kollimatorlinse. Eine ebene Oberfläche ist mit einer sägezahnförmigen Struktur versehen, um das austretende Licht abzulenken,

In bestimmten Anwendungen, insbesondere für eine Gebäudebeleuchtung, ist der Einsatz einer Notbeleuchtung erforderlich oder wünschenswert. Die Notbeleuchtung kann als Fluchtwegbeleuchtung ausgestaltet sein, die in einem Notfall, insbesondere bei Ausfall eines Stromversorgungssystem, das Verlassen von Räumen ermöglichen soll. Die Notbeleuchtung kann die Funktion einer Anti-Panik-Beleuchtung erfüllen oder als eine Ersatzbeleuchtung wirken, die in einem Notfall die zeitweilige Fortsetzung von Arbeitsvorgängen erlaubt, um diese noch zu einem sicheren Abschluss zu bringen. Ein Ansatz zum Bereitstellen einer Notbeleuchtung kann in der Verwendung von separaten LED-Modulen bestehen, die nur in einem Notfall aktiviert werden. Dies kann Nachteile im Hinblick auf Kosten und Installationsraumerfordernisse mit sich bringen.

Die DE 10 2010 003 799 A1 beschreibt ein modulares LED-Beleuchtungssystem mit einer Notlichtfunktion, das eine Notlichtbetriebsschaltung aufweist, die mit einem wiederaufladbaren Energiespeicher verbunden ist und die bei Ausfall einer AC-Versorgungsspannung eine Speisung einer modularen LED-Beleuchtung übernimmt.

Die DE 10 2008 016 788 beschreibt eine weiteres LED-Modul mit Notlichtfunktion.

Aufgabe der Erfindung ist, ein LED-Modul, ein Beleuchtungssystem und ein Verfahren zum Betreiben eines LED-Moduls bereitzustellen, die für den Einsatz bei einer Notbeleuchtung geeignet sind.

Die Aufgabe wird gelöst durch ein LED-Modul, ein Beleuchtungssystem und ein Verfahren zum Betreiben eines LED-Moduls mit den in den unabhängigen Patentansprüchen angegebenen Merkmalen. Die abhängigen Patentansprüche definieren Weiterbildungen der Erfindung.

Ein LED-Modul mit integrierter Notlichtfunktion nach einer Ausführungsform umfasst eine Mehrzahl von LEDs und ist zum Anschluss an ein Betriebsgerät zum kontrollierten Aktivieren der Mehrzahl von LEDs eingerichtet. Das LED-Modul ist so eingerichtet, dass das wenigstens eine Betriebsgerät in einem Normalbetriebszustand eine Gruppe von LEDs aktivieren kann, um eine Lichtabgabe über eine erste Lichtaustrittsfläche des LED-Moduls zu bewirken, und dass das wenigstens eine Betriebsgerät in einem Notiichtbetriebszustand wenigstens einen Teil der zu der Gruppe gehörenden LEDs aktivieren kann, um eine Lichtabgabe über eine zweite Lichtaustrittsfläche des LED-Moduls zu bewirken, wobei die erste Lichtaustrittsfläche und die zweite Lichtaustrittsfläche unterschiedliche Formen aufweisen.

Ein derartiges LED-Modul erlaubt, abhängig vom Betriebzustand wahlweise eine Lichtabgabe über die erste Lichtaustrittsfläche oder die zweite Lichtaustrittsfläche zu realisieren. Dadurch kann ein Beleuchtungsmuster selektiv für einen Dauerlichtbetrieb im Normalbetriebszustand oder für einen Notfallbetrieb im Notlichtbetriebszustand aktiviert werden. Ein und dasselbe LED-Modul kann abhängig davon, ob die integrierte Notlichtfunktion aktiviert ist, das für Dauerlichtbetrieb oder Notlichtbetrieb geeignete Beleuchtungsmuster ausgeben. Ein als Deckenleuchte bzw. so genanntes "Downlight" montiertes LED-Modul mit integrierter Notlichtfunktion kann verwendet werden, um beispielsweise eine Sicherheitsbeleuchtung zu realisieren, die in einem Notfall das Verlassen von Räumen eines Gebäudes ermöglichen soll.

Um eine Aktivierbarkeit unterschiedlicher LED-Gruppen des LED-Moduls in unterschiedlichen Betriebszuständen zu erlauben, kann das LED-Modul erste elektrische Verbindungen umfassen, die in dem Normalbetriebszustand die Energieversorgung der Gruppe von LEDs erlauben. Das LED-Modul kann zweite elektrische Verbindungen umfassen, die in dem Notlichtbetriebszustand die Energieversorgung des Teils der zu der Gruppe gehörenden LEDs zu erlauben

Die LEDs der Mehrzahl von LEDs können als anorganische LEDs oder organische LEDs (OLEDs) ausgestaltet sein.

Das LED-Modul kann so eingerichtet sein, dass eine weitere Gruppe von LEDs aus der Mehrzahl von LEDs durch das wenigstens eine Betriebsgerät selektiv nur in dem Notlichtbetriebszustand aktiviert wird, um eine Lichtabgabe über die zweite Lichtaustrittsfläche des LED-Moduls zu bewirken. Dies erlaubt die Erzeugung eines Beleuchtungsmusters im Notlichtbetrieb, das sich in einer Richtung, beispielsweise entlang eines Fluchtwegs, über eine größere Länge erstreckt als ein von dem LED-Modul im Normalbetriebszustand erzeugtes Beleuchtungsmuster.

Das wenigstens eine Betriebsgerät kann eingerichtet sein, um bei Einleitung des Notlichtbetriebszustands einen weiteren Teil der zu der Gruppe gehörenden LEDs zu deaktivieren. Dadurch kann eine Betriebsdauer im Notlichtbetriebszustand durch Energieeinsparung verlängert werden.

Die zweite Lichtaustrittsfläche kann in einer ersten Richtung eine erste Abmessung aufweisen und in einer dazu senkrechten zweiten Richtung eine zweite Abmessung aufweisen, die kleiner als die erste Abmessung ist. Dadurch wird ein nicht rotationssymmetrisches oder asymmetrisches Beleuchtungsmuster generiert, das sich beispielsweise entlang eines Fluchtwegs erstrecken kann. Entsprechend können die LEDs des LED-Moduls, die im Notlichtbetriebszustand aktiviert sind, in einem Bereich angeordnet sind, der in der ersten Richtung eine größere Länge aufweist als in der dazu senkrechten zweiten Richtung. Die LEDs des LED-Moduls, die im Notlichtbetriebszustand aktiviert sind, können beispielsweise in einem ovalförmigen oder ellipsenförmigen Bereich des LED-Moduls angeordnet sein.

Die erste Lichtaustrittsfläche kann in der ersten Richtung eine dritte Abmessung aufweisen, die kleiner als die erste Abmessung ist, und kann in der zweiten Richtung eine vierte Abmessung aufweisen, die größer als die zweite Abmessung ist. Insbesondere kann die erste Lichtaustrittsfläche im Wesentlichen kreisförmig sein.

Die erste Lichtaustrittsfläche und die zweite Lichtaustrittsfläche können überlappen. Ein Flächenmittelpunkt der ersten Lichtaustrittsfläche kann mit einem Flächenmittelpunkt der zweiten Lichtaustrittsfläche zusammenfallen. Sowohl die erste Lichtaustrittsfläche als auch die zweite Lichtaustrittsfläche können jeweils eine zusammenhängende Fläche sein.

Das wenigstens eine Betriebsgerät kann eingerichtet sein, um die Mehrzahl von LEDs abhängig von einem Betriebszustand selektiv zu aktivieren, um in dem Normalbetriebszustand ein rotationssymmetrisches Beleuchtungsmuster abzustrahlen und um in dem Notlichtbetriebszustand ein nicht rotationssymmetrisches Beleuchtungsmuster abzustrahlen. Das wenigstens eine Betriebsgerät kann die LEDs, die im Notlichtbetriebszustand aktiviert sind, derart aktivieren, dass ein asymmetrisches Beleuchtungsmuster resultiert.

Das LED-Modul kann einen ersten Eingang und einen zweiten Eingang umfassen. Das LED-Modul kann so eingerichtet sein, dass über den ersten Eingang in dem Normalbetriebszustand die Gruppe von LEDs aktiviert wird, um die Lichtabgabe über die erste Lichtaustrittsfläche des LED-Moduls zu bewirken. Das LED-Modul kann so eingerichtet sein, dass über den zweiten Eingang, der von dem ersten Eingang verschieden ist, in dem Notlichtbetriebszustand LEDs der Mehrzahl von LEDs aktiviert werden, um die Lichtabgabe über die zweite Lichtaustrittsfläche des LED-Moduls zu bewirken. Der erste Eingang und der zweite Eingang können voneinander unabhängig sein.

Der erste Eingang kann mit einem ersten Versorgungsmodul gekoppelt sein, und der zweite Eingang kann mit einem zweiten Versorgungsmodul, das von dem ersten Versorgungsmodul verschieden ist, gekoppelt sein. Das zweite Versorgungsmodul kann eine Batterie umfassen. Die Batterie kann als NiMH-Akkumulator oder als NiCd-Akkumulator ausgestaltet sein. Das erste Versorgungsmodul und das zweite Versorgungsmodul können mit einer Wechselstromquelle gekoppelt sein. Im Normalbetrieb kann das erste Versorgungsmodul Energie von der Wechselstromquelle empfangen und die Gruppe von LEDs des LED-Moduls mit Strom versorgen. Im Normalbetrieb kann das zweite Versorgungsmodul Energie von der Wechselstromquelle empfangen und eine Batterie des zweiten Versorgungsmoduls abhängig von einem Ladekriterium aufladen. Im Normalbetrieb kann das zweite Versorgungsmodul keinen Strom an das LED-Modul bereitstellen. Im Notfallbetrieb kann das zweite Versorgungsmodul Strom an das LED-Modul bereitstellen. Das erste Versorgungsmodul und/oder das zweite Versorgungsmodul können als Konstantspannungsquelle oder Konstantstromquelle wirken. Eine Leistung des zweiten Versorgungsmoduls kann kleiner sein als eine Leistung des ersten Versorgungsmoduls. Die Leistung des zweiten Versorgungsmoduls kann so gewählt sein, dass im Notlichtbetriebszustand eine Beleuchtungsstärke von mindestens 1 lx entlang eines Fluchtwegs erreicht wird. Für eine Anti-Panik-Beleuchtung kann die Leistung des zweiten Versorgungsmoduls kann so gewählt sein, dass im Notlichtbetriebszustand eine Beleuchtungsstärke von mindestens 0,5 Ix erreicht wird.

Eine Steuerung kann eingerichtet sein, um den zweite Eingang selektiv nur in dem Notlichtbetriebszustand mit Energie zu versorgen.

Ein Beleuchtungssystem nach einer Ausführungsform umfasst LED-Module mit integrierter Notlichtfunktion und LED-Module ohne Notlichtfunktion. Die LED-Module mit integrierter Notlichtfunktion sind als LED-Module nach Ausführungsbeispielen ausgestaltet. Wenigstens ein LED-Modul ohne Notlichtfunktion kann zwischen einem Paar von LED-Modulen mit Notlichtfunktion montiert sein.

Die LED-Module mit integrierter Notlichtfunktion und die LED-Module ohne Notlichtfunktion können in einem Deckenbereich montiert sein. Die LED-Module mit integrierter Notlichtfunktion und die LED-Module ohne Notlichtfunktion können entlang eines Fluchtwegs in einem Abstand voneinander montiert sein. Eine Orientierung der LED-Module mit integrierter Notlichtfunktion kann abhängig von einer Richtung des Fluchtwegs gewählt sein. Die LED-Module mit integrierter Notlichtfunktion können jeweils so ausgerichtet sein, dass eine Längsachse eines im Notlichtbetriebzustand von dem LED-Modul mit integrierter Notlichtfunktion erzeugten Beleuchtungsmusters entlang des Fluchtwegs gerichtet ist.

Entlang des Fluchtwegs können abwechselnd jeweils ein LED-Modul mit integrierter Notlichtfunktion und ein LED-Modul ohne Notlichtfunktion montiert sein. Dadurch kann die benötigte Anzahl von LED-Modulen mit integrierter Notlichtfunktion verringert werden.

Das Beleuchtungssystem kann ein Versorgungssystem, das mit den LED-Modulen mit integrierter Notlichtfunktion und mit den LED-Modulen ohne Notlichtfunktion gekoppelt ist, umfassen. Das Versorgungssystem kann eingerichtet sein, um in dem Normalbetriebszustand sowohl die LED-Module mit integrierter Notlichtfunktion als auch die LED-Module ohne Notlichtfunktion mit Strom zu versorgen. Das Versorgungssystem kann eingerichtet sein, um in dem Notlichtbetriebszustand nur die LED-Module mit integrierter Notlichtfunktion mit Strom zu versorgen. Im Notlichtbetriebszustand kann die Versorgung der LED-Module unter Verwendung einer Batterie erfolgen.

Nach einer weiteren Ausführungsform wird ein Verfahren zum Betreiben eines LED-Moduls mit integrierter Notlichtfunktion, das eine Mehrzahl von LEDs aufweist, angegeben. In einem Normalbetriebszustand wird eine Gruppe von LEDs so aktiviert, dass eine Lichtabgabe über eine erste Lichtaustrittsfläche des LED-Moduls erfolgt. In einem Notlichtbetriebszustand wird ein Teil der zu der Gruppe gehörenden LEDs so aktiviert, dass eine Lichtabgabe über eine zweite Lichtaustrittsfläche des LED-Moduls erfolgt, wobei die erste Lichtaustrittsfläche und die zweite Lichtaustrittsfläche unterschiedliche Formen aufweisen.

Weiterbildungen des Verfahrens und die damit jeweils erzielten Wirkungen entsprechen den Weiterbildungen des LED-Moduls mit integrierter Notlichtfunktion und des Beleuchtungssystems nach Ausführungsbeispielen.

Weitere Merkmale, Wirkungen und Funktionen von Ausführungsbeispielen der Erfindung werden aus der nachfolgenden detaillierten Beschreibung unter Bezugnahme auf die beigefügten Zeichnungen ersichtlich.
FIG. 1 zeigt ein System mit einem LED-Modul mit integrierter Notlichtfunktion nach einem Ausführungsbeispiel.
FIG. 2 zeigt eine Anordnung von LEDs in einem LED-Modul mit integrierter Notlichtfunktion nach einem Ausführungsbeispiel.
FIG. 3 veranschaulicht den Betrieb des LED-Moduls mit integrierter Notlichtfunktion nach einem Ausführungsbeispiel in einem Normalbetriebszustand.
FIG. 4 zeigt eine Lichtaustrittsfläche des LED-Moduls mit integrierter Notlichtfunktion in dem Normalbetriebszustand.
FIG. 5 veranschaulicht den Betrieb des LED-Moduls mit integrierter Notlichtfunktion nach einem Ausführungsbeispiel in einem Notlichtbetriebszustand.
FIG. 6 zeigt eine Lichtaustrittsfläche des LED-Moduls mit integrierter Notlichtfunktion in dem Notlichtbetriebszustand.
FIG. 7 zeigt ein Beleuchtungssystem mit mehreren LED-Modulen mit integrierter Notlichtfunktion und mit mehreren LED-Modulen ohne Notlichtfunktion, das zur Fluchtwegbeleuchtung einsetzbar ist, in einem Normalbetriebszustand.
FIG. 8 zeigt ein von dem Beleuchtungssystem im Normalbetriebszustand auf einem Boden erzeugtes Beleuchtungsmuster.
FIG. 9 zeigt das Beleuchtungssystem von FIG. 7 in einem Notlichtbetriebszustand.
FIG. 10 zeigt ein von dem Beleuchtungssystem im Notlichtbetriebszustand auf dem Boden erzeugtes Beleuchtungsmuster.

In den Figuren bezeichnen identische oder ähnliche Bezugszeichen identische oder ähnliche Einheiten oder Komponenten. Die Merkmale der verschiedenen Ausführungsbeispiele können miteinander kombiniert werden, sofern dies in der folgenden Beschreibung nicht ausdrücklich ausgeschlossen ist.

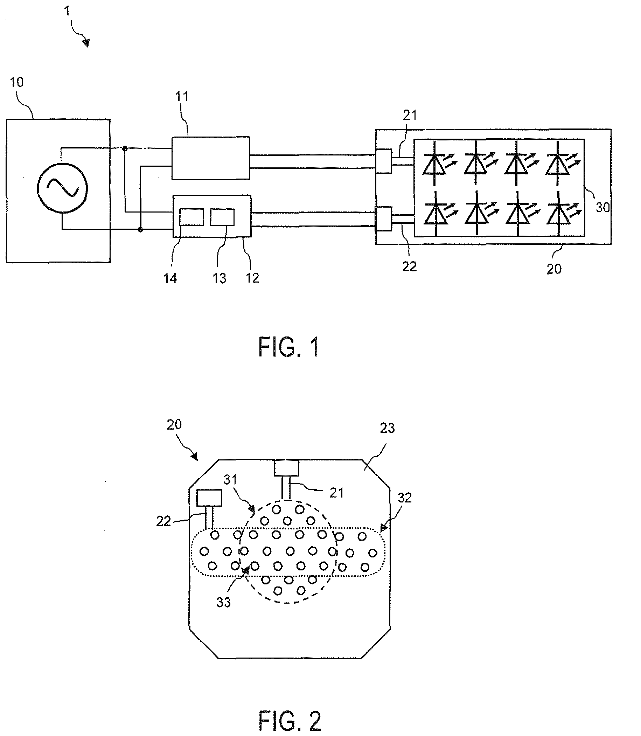

FIG. 1 zeigt ein System 1 mit einem LED-Modul 20 nach einem Ausführungsbeispiel der Erfindung. Das System umfasst neben dem LED-Modul 20 eine Netzspannungsquelle 10, ein erstes Betriebsgerät 11 und ein zweites Betriebsgerät 12. Das LED-Modul 20 ist so ausgestaltet, dass es in einem Normalbetriebszustand und in einem Notlichtbetriebszustand betrieben werden kann. In dem Normalbetriebszustand, der einem Dauerlichtbetriebszustand entsprechen kann, gibt das LED-Modul 20 Licht über eine erste Lichtaustrittsfläche aus. Das Licht wird in einem ersten räumlichen Strahlungsmuster abgestrahlt. In dem Notlichtbetriebszustand gibt das LED-Modul 20 Licht über eine zweite Lichtaustrittsfläche aus. Das Licht wird in einem zweiten räumlichen Strahlungsmuster abgestrahlt, das von dem ersten räumlichen Strahlungsmuster verschieden ist. Die erste Lichtaustrittsfläche und die zweite Lichtaustrittsfläche weisen unterschiedliche Formen auf. Die zweite Lichtaustrittsfläche kann asymmetrisch sein und kann insbesondere nicht-rotationssysmmetrisch sein.

Das erste Betriebsgerät 11 weist eine erste Schaltung auf und dient als erstes Versorgungsmodul, das das LED-Modul 20 im Dauerlichtbetrieb mit Energie versorgt. Das erste Betriebsgerät 11 kann ein Konverter sein. Das erste Betriebsgerät 11 eine Konstantspannungsquelle oder Konstantstromquelle umfassen oder als Konstantspannungsquelle oder Konstantstromquelle ausgebildet sein. Das erste Betriebsgerät 20 kann ausgestaltet sein, um im Normalbetriebszustand des LED-Moduls 20 ein Dimmen und/oder eine Farbsteuerung von LEDs des LED-Moduls 20 zu erlauben.

Das zweite Betriebsgerät 12 weist eine zweite Schaltung auf und dient als zweites Versorgungsmodul, das das LED-Modul 20 in einem Notfallbetriebszustand mit Energie versorgt. Das zweite Betriebsgerät 12 kann eine Batterie 13 aufweisen. Die Batterie 13 kann als NiMH-Akkumulator oder NiCd-Akkumulator ausgestaltet sein. Solange kein Ausfall der Netzspannungsquelle 10 vorliegt, kann die Batterie 13 aufgeladen werden, beispielsweise wenn ein bestimmtes Ladekriterium erfüllt ist. Die zum Aufladen der Batterie 13 benötigte Energie kann aus der Netzspannungsquelle 10 gezogen werden. Das zweite Betriebsgerät 12 kann eine Steuerung 14 umfassen. Die Steuerung 14 kann so ausgestaltet sein, dass sie bei einem Ausfall der Netzspannungsquelle 10 und/oder als Antwort auf ein über eine Schnittstelle empfangenes Signal, das den Eintritt eines Notfalls anzeigt, eine Stromversorgung des LED-Moduls 20 durch das zweite Betriebsgerät 12 einleitet. Das zweite Betriebsgerät 12 kann eine Konstantspannungsquelle oder Konstantstromquelle umfassen oder als Konstantspannungsquelle oder Konstantstromquelle ausgebildet sein, um das LED-Modul 20 im Notlichtbetriebszustand mit Strom zu versorgen. Die Steuerung 14 kann so ausgestaltet sein, dass das zweite Betriebsgerät 12 im Normalbetriebszustand keinen Strom an das LED-Modul 20 ausgibt. Eine maximale Ausgangsleistung des ersten Betriebsgeräts 11 im Normalbetriebszustand ist größer als eine Ausgangsleistung des zweiten Betriebsgeräts 12. Die Ausgangsleistung des zweiten Betriebsgeräts 12 kann so gewählt sein, dass das LED-Modul 20 ein Beleuchtungsmuster mit einer Beleuchtungsstärke von mindestens 1 Ix entlang eines von dem LED-Modul 20 beleuchteten Abschnitts eines Fluchtwegs erzeugt. Alternativ oder zusätzlich kann die Ausgangsleistung des zweiten Betriebsgeräts 12 so gewählt sein, dass das LED-Modul 20 eine Beleuchtungsstärke von mindestens 0,5 lx für eine Anti-Panik-Beleuchtung erzielt. Das erste Betriebsgerät 11 und das zweite Betriebsgerät 12 können in einer baulichen Einheit kombiniert sein.

Das LED-Modul 20 umfasst eine Mehrzahl von LEDs 30. Die LEDs können einzeln selektiv ansteuerbar sein. Die Mehrzahl von LEDs 30 kann in wenigstens einer LED-Strecke und insbesondere in wenigstens zwei LED-Strecken angeordnet sein. Die Mehrzahl von LEDs 30 kann auf einem Träger, insbesondere auf einem flächigen Träger, montiert sein. Das LED-Modul 20 kann als Deckenleuchte ausgestaltet sein. Das LED-Modul 20 kann als so genanntes "Downlight" ausgestaltet sein, das in dem Normalbetriebzustand über eine kreisförmige erste Lichtaustrittsfläche Licht in einem Strahlkegel ausgibt. Wenn das LED-Modul 20 im Notlichtbetriebszustand betrieben wird, gibt das LED-Modul 20 über die zweite Lichtaustrittsfläche Licht aus, wobei die zweite Lichtaustrittsfläche mit der ersten Lichtaustrittsfläche überlappen kann und eine Form aufweist, die von der Form der ersten Lichtaustrittsfläche verschieden ist. Dies erlaubt, das LED-Modul 20 im Dauerlichtbetrieb als "Downlight" einzusetzen, und das LED-Modul 20 im Notfallbetriebzustand beispielsweise zur Fluchtwegbeleuchtung zu verwenden.

Um abhängig vom Betriebszustand selektiv ein erstes Beleuchtungsmuster über die erste Lichtaustrittsfläche oder ein zweites Beleuchtungsmuster über die zweite Lichtaustrittsfläche abstrahlen zu können, kann das LED-Modul 20 einen ersten Eingang 21 und einen zweiten Eingang 22 aufweisen. Jeder Eingang kann wenigstens einer LED-Strecke zugeordnet sein. Über den ersten Eingang 21 kann in dem Normalbetriebszustand eine Gruppe von LEDs aus dem ersten Betriebsgerät 11 mit Strom versorgt werden, um eine Lichtausgabe über die erste Lichtaustrittsfläche zu bewirken. Über den zweiten Eingang 22 können selektiv nur im Notlichtbetriebszustand LEDs aus dem zweiten Betriebsgerät 12 mit Strom versorgt werden, um eine Lichtausgabe über die zweite Lichtaustrittsfläche zu bewirken. Zumindest ein Teil der LEDs, die im Normalbetriebszustand von dem ersten Eingang 21 mit Strom versorgt werden, können auch im Notlichtbetriebszustand von dem zweiten Eingang 22 mit Strom versorgt werden. Bei Einleitung des Notlichtbetriebszustands kann ein weiterer Teil der LEDs, die im Normalbetriebszustand von dem ersten Eingang 21 mit Strom versorgt werden, deaktiviert werden, um das zweite Beleuchtungsmuster für den Notlichtbetrieb zu erzeugen. Alternativ oder zusätzlich können zusätzliche LEDs, die im Normalbetriebszustand von dem ersten Eingang 21 nicht mit Strom versorgt werden, selektiv im Notlichtbetriebszustand aktiviert werden, um das zweite Beleuchtungsmuster für den Notlichtbetrieb zu erzeugen. Der zweite Eingang 22 ist von dem ersten Eingang 21 unabhängig und kann selektiv nur im Notlichtbetriebszustand eingeschaltet bzw. mit Energie versorgt werden. Das erste Betriebsgerät 11 ist mit dem ersten Eingang 21 gekoppelt. Das zweite Betriebsgerät 12 ist mit dem zweiten Eingang 22 gekoppelt. Das LED-Modul 20 kann eine erste Schnittstelle zum Verbinden des ersten Eingangs 21 mit dem ersten Betriebsgerät 11 und eine zweite Schnittstelle zum Verbinden des zweiten Eingang 22 mit dem zweiten Betriebsgerät 12 aufweisen.

Wie unter Bezugnahme auf FIG. 2-6 näher beschrieben wird, ist das LED-Modul 20 so ausgestaltet, dass kontrolliert werden kann, ob eine Lichtabgabe über die erste Lichtaustrittsfläche für den Dauerlichtbetrieb oder über die zweite Lichtaustrittsfläche für den Notlichtbetrieb erfolgen soll.

FIG. 2 ist eine Aufsicht des LED-Moduls 20 nach einem Ausführungsbeispiel. Das LED-Modul 20 weist eine Mehrzahl von LEDs auf, die an einem Träger 23 montiert sind. LEDs sind in FIG. 2, FIG. 4 und FIG. 6 schematisch als Kreise dargestellt. Das LED-Modul kann einen (in FIG. 2 nicht dargestellten) Reflektor aufweisen. Das LED-Modul 20 kann eine Befestigungseinrichtung zur Befestigung an einer Decke umfassen. Die Befestigungseinrichtung kann so ausgestaltet sein, dass das LED-Modul 20 durch Schrauben oder durch Festclipsen an der Decke befestigt werden kann.

Eine Gruppe 31 von LEDs wird im Normalbetriebszustand mit Strom versorgt, um eine Lichtabgabe über die erste Lichtaustrittsfläche zu erreichen. Unter Kontrolle des ersten Betriebsgeräts 11 können ein Dimmen und/oder eine Farbsteuerung erfolgen. Eine zweite Gruppe 32 von LEDs wird im Notlichtbetriebszustand mit Strom versorgt, um eine Lichtabgabe über die zweite Lichtaustrittsfläche zu erreichen. Die zweite Gruppe 32 von LEDs sind in einem Flächenbereich des Trägers 23 angeordnet, der asymmetrisch in dem Sinne ist, dass er in einer ersten Richtung eine größere Ausdehnung aufweist als in einer dazu senkrechten zweiten Richtung. Entsprechend kann von der zweiten Gruppe 32 ein räumliches Beleuchtungsmuster erzeugt werden, das sich in der ersten Richtung über eine größere Länge erstreckt als in der dazu senkrechten zweiten Richtung. Im Notlichtbetriebszustand kann das von der zweiten Gruppe 32 erzeugte räumliche Beleuchtungsmuster zeitlich unverändert sein, so lange die Batterie 13 noch eine ausreichende Leistung bereitstellt.

Ein Teil 33 der Gruppe 31 von LEDs, die im Normalbetriebszustand mit Strom versorgt werden, kann auch im Notlichtbetriebszustand über den zweiten Eingang 22 mit Strom versorgt werden. Einige LEDs der Gruppe 31 von LEDs, die im Normalbetriebszustand mit Strom versorgt werden, können im Notlichtbetriebszustand nicht mit Strom versorgt werden, um den Zeitraum zu verlängern, in dem ein Notlichtbetrieb durch die Batterie 13 des Versorgungsmoduls aufrecht erhalten werden kann.

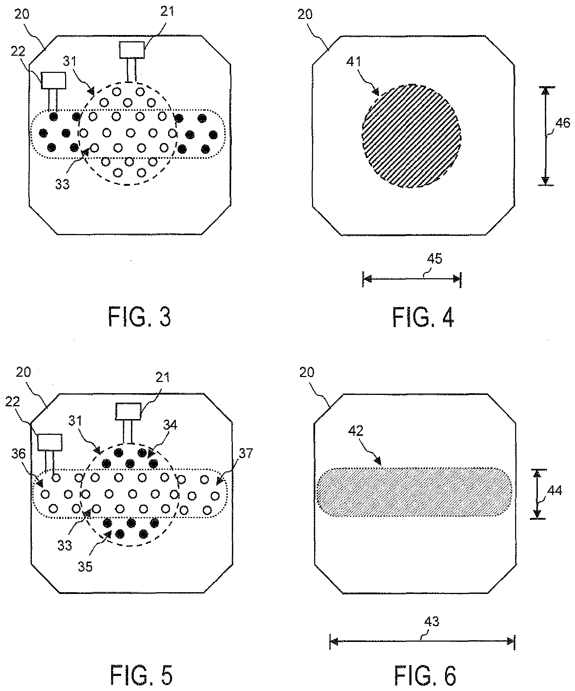

FIG. 3 zeigt das LED-Modul 20 im Normalbetriebszustand, wobei offene Kreise LEDs repräsentieren, die für eine Lichtabgabe mit Strom versorgt werden, und wobei gefüllte Kreise deaktivierte LEDs repräsentieren, die nicht mit Strom versorgt werden. Im Normalbetriebszustand wird die Gruppe 31 von LEDs mit Strom versorgt. Das zweite Betriebsgerät 12 und somit der zweite Eingang 22 kann sich dabei in einem AUSZustand befinden.

FIG. 4 veranschaulicht die Lichtabgabe durch das LED-Modul im Normalbetriebszustand. Aufgrund der Anordnung der Gruppe 31 von LEDs, die im Normalbetriebszustand aktiviert sind, erfolgt eine Lichtabgabe über die erste Lichtaustrittsfläche 41. Die erste Lichtaustrittsfläche 41 kann rotationssymmetrisch sein. Die erste Lichtaustrittsfläche 41 kann einen Durchmesser 45 bzw. 46 aufweisen, der aufgrund der Rotationssymmetrie in unterschiedlichen Richtungen den gleichen Wert aufweist. Entsprechend kann über die erste Lichtaustrittsfläche 41 ein Lichtkegel abgestrahlt, der ein kreisförmiges Beleuchtungsmuster auf einem Boden erzeugen kann.

FIG. 5 zeigt das LED-Modul 20 im Notlichtbetriebszustand, wobei offene Kreise LEDs repräsentieren, die für eine Lichtabgabe mit Strom versorgt werden, und wobei gefüllte Kreise deaktivierte LEDs repräsentieren, die nicht mit Strom versorgt werden. Im Notlichtbetriebszustand wird ein Teil 33 der Gruppe 31 von LEDs, die auch im Normalbetriebszustand Licht abgeben, mit Strom versorgt. Der zweite Eingang 22 kann so eingerichtet bzw. so mit elektrisch leitenden Verbindungen gekoppelt sein, dass ein weiterer Teil 34, 35 der LEDs, die im Normalbetriebszustand Licht abgeben, im Notlichtbetriebszustand nicht mit Strom versorgt werden. Der zweite Eingang 22 kann so eingerichtet bzw. so mit elektrisch leitenden Verbindungen gekoppelt sein sein, dass eine weitere Gruppe 36, 37 von LEDs, die im Normalbetriebszustand kein Licht abgeben, selektiv nur im Notlichtbetriebszustand mit Strom versorgt werden. Die Gesamtheit der LEDs, die im Notlichtbetriebszustand Licht abgeben, erstreckt sich über einen Bereich des LED-Moduls, der eine längliche Form aufweist, die nicht rotationssymmetrisch ist.

FIG. 6 veranschaulicht die Lichtabgabe durch das LED-Modul im Notlichtbetriebszustand. Aufgrund der Anordnung der LEDs, die im Notlichtbetriebszustand aktiviert sind, erfolgt eine Lichtabgabe über die zweite Lichtaustrittsfläche 42. Die zweite Lichtaustrittsfläche 42 weist eine andere Form als die erste Lichtaustrittsfläche 41 auf. Die zweite Lichtaustrittsfläche 42 kann ovalförmig oder ellipsenförmig sein. Die zweite Lichtaustrittsfläche 42 weist in einer ersten Richtung eine erste Ausdehnung 43 und in einer dazu senkrechten zweiten Richtung eine zweite Ausdehnung 44 auf. Die erste Ausdehnung 43 ist größer als der Durchmesser 45, 46 der ersten Lichtaustrittsfläche 41. Dadurch kann erreicht werden, dass entlang der ersten Richtung Licht über einen größeren Öffnungswinkel ausgestrahlt wird, wenn der Notlichtbetriebszustand aktiviert wird. Die zweite Ausdehnung 44 kann kleiner als der Durchmesser 45, 46 der ersten Lichtaustrittsfläche 41 sein. Die erste Lichtaustrittsfläche 41 und die zweite Lichtaustrittsfläche 42 können jeweils eine zusammenhängende Fläche definieren, wobei die zweite Lichtaustrittsfläche 42 mit der ersten Lichtaustrittsfläche 41 überlappt. Flächenmittelpunkte der ersten Lichtaustrittsfläche 41 und der zweiten Lichtaustrittsfläche 42 können zusammenfallen.

Im Notlichtbetriebszustand wird kann eine Versorgung des LED-Moduls mit einer Leistung erfolgen, die kleiner als die maximale von dem ersten Betriebsgerät bereitgestellte Leistung sein kann. Entsprechend kann im Notlichtbetriebszustand die Strahlungsleistung des LED-Moduls kleiner sein als die im Normalbetriebszustand ohne Dimmung erreichte Strahlungsleistung.

Das LED-Modul nach Ausführungsbeispielen erlaubt, abhängig vom Betriebszustand eine Lichtabstrahlung in unterschiedlichen Strahlungsmustern zu aktivieren. Durch eine Ausgestaltung, bei der das LED-Modul im Notlichtbetriebszustand Licht in einem Muster ausgibt, das asymmetrisch bzw. nicht rotationssymmetrisch ist, kann in einem Beleuchtungssystem der Abstand zwischen LED-Modulen mit integrierter Notlichtfunktion vergrößert werden. Es ist beispielsweise möglich, in einem Deckenbereich entlang eines Fluchtwegs LED-Module mit integrierter Notlichtfunktion so zu montieren, dass zwischen zwei LED-Modulen mit integrierter Notlichtfunktion jeweils ein LED-Modul ohne Notlichtfunktion installiert ist oder mehrere LED-Module ohne Notlichtfunktion installiert sind. Der Abstand zwischen entlang des Fluchtwegs aufeinanderfolgenden LED-Modulen mit integrierter Notlichtfunktion kann so gewählt sein, dass durch die LED-Module mit integrierter Notlichtfunktion auch bei vollständiger Deaktivierung der LED-Module ohne Notlichtfunktion eine Beleuchtungsstärke von mindestens 1 lx entlang des Fluchtwegs erzielt wird. Der Abstand zwischen entlang des Fluchtwegs aufeinanderfolgenden LED-Modulen mit integrierter Notlichtfunktion kann so gewählt sein, dass durch die LED-Module mit integrierter Notlichtfunktion auch bei vollständiger Deaktivierung der LED-Module ohne Notlichtfunktion eine durchgängige Beleuchtung des Fluchtwegs erreichen.

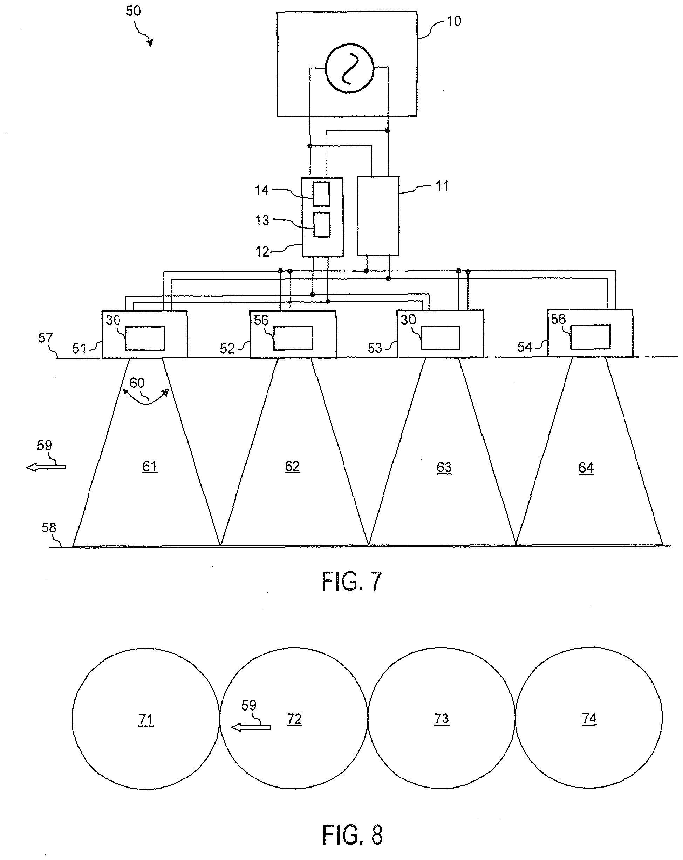

FIG. 7 zeigt ein Beleuchtungssystem 50 nach einem Ausführungsbeispiel. Das Beleuchtungssystem 50 umfasst ein erstes LED-Modul 51, ein zweites LED-Modul 52, ein drittes LED-Modul 53 und ein viertes LED-Modul 54. Eine andere Anzahl von LED-Modulen kann verwendet werden. Die LED-Module 51-54 sind jeweils als Deckenleuchten ausgestaltete. Die LED-Module 51-54 können insbesondere als so genannte "Downlights" ausgestaltet sein. Die LED-Module 51-54 können jeweils eine Mehrzahl von LEDs und optional einen Reflektor umfassen. Die LED-Module 51-54 sind an einer Decke 57, beispielsweise einer Zimmer- oder Flurdecke, befestigt. Die LED-Module 51-54 geben Licht aus, um einen Boden 58 zu beleuchten.

Das erste LED-Modul 51 und das dritte LED-Modul 53 kann jeweils als LED-Modul mit integrierter Notlichtfunktion ausgestaltet sein, wie es unter Bezugnahme auf FIG. 1-6 beschrieben wurde. Die LED-Module 51, 53 mit integrierter Notlichtfunktion können insbesondere so ausgestaltet sein, dass sie in einem Normalbetriebszustand oder in einem Notlichtbetriebszustand betrieben werden können. Wenn die LED-Module 51, 53 mit integrierter Notlichtfunktion im Notlichtbetriebszustand betrieben werden, geben sie Licht in einem räumlichen Strahlungsmuster ab, das von dem Strahlungsmuster im Normalbetriebszustand verschieden ist. Das Strahlungsmuster im Notlichtbetriebszustand kann zeitlich unveränderlich sein, so lange eine Batterie zur Speisung des LED-Moduls noch ausreichend geladen ist. Die LED-Module 51, 53 mit integrierter Notlichtfunktion können jeweils so ausgestaltet sein, dass im Normalbetriebszustand LEDs des entsprechenden Moduls über einen ersten Eingang von einem ersten Betriebsgerät 11 mit Strom versorgt werden, um Licht über eine erste Lichtaustrittsfläche auszugeben. Die LED-Module 51, 53 mit integrierter Notlichtfunktion können jeweils so ausgestaltet sein, dass im Notlichtbetriebszustand LEDs des entsprechenden Moduls über einen zweiten Eingang von einem zweiten Betriebsgerät 12 mit Strom versorgt werden, um Licht über eine zweite Lichtaustrittsfläche auszugeben, deren Form von einer Form der ersten Lichtaustrittsfläche verschieden ist.

Die LED-Module 51, 53 mit integrierter Notlichtfunktion können an der Decke 57 in einer bestimmten Ausrichtung angeordnet sein. Die Ausrichtung kann abhängig von einer Richtung 59 eines Fluchtwegs gewählt sein. Die LED-Module 51, 53 mit integrierter Notlichtfunktion können so angeordnet sein, dass ein von den LED-Modulen 51, 53 im Notlichtbetriebszustand erzeugtes Beleuchtungsmuster eine längere Achse so ausgerichtet hat, dass sie entlang der Richtung 59 des Fluchtwegs zeigt. Wenn im Notlichtbetriebszustand Licht über die zweite Lichtabstrahlfläche 42 mit einer länglichen Form ausgegeben wird, wie sie in FIG. 6 dargestellt ist, können die LED-Module 51, 53 mit integrierter Notlichtfunktion so ausgerichtet sein, dass die Längsachse der zweiten Lichtabstrahlfläche 42 entlang der Richtung 59 des Fluchtwegs ausgerichtet ist.

Das zweite LED-Modul 52 und das vierte LED-Modul 54 können herkömmlichen "Downlights" sein, die keine Notlichtfunktion aufweisen. Im Dauerlichtbetrieb können das zweite LED-Modul 52 und das vierte LED-Modul 54 Licht über eine kreisförmige Lichtaustrittsfläche ausgeben, um so ein Strahlungsmuster zu erzeugen, das beispielsweise einen kreisförmigen Bereich auf dem Boden 58 ausleuchten kann. Das zweite LED-Modul 52 und das vierte LED-Modul 54 können jeweils eine Anordnung 56 von mehreren LEDs aufweisen. Die geometrische Anordnung von LEDs in der Anordnung 56 der LED-Module ohne Notlichtfunktion kann von der geometrischen Anordnung von LEDs in den LED-Modulen mit integrierter Notlichtfunktion verschieden sein. Beispielsweise können die LEDs der Anordnung 56 der LED-Module ohne Notlichtfunktion in einer Fläche angeordnet sein, die im Wesentlichen kreisförmig ist. Die LEDs der Anordnung 56 der LED-Module ohne Notlichtfunktion können in einer identischen Form angeordnet sein wie die Gruppe 31 von LEDs der LED-Module mit integrierter Notlichtfunktion, die im Normalbetriebszustand aktiviert sind.

Die LED-Module 51, 53 mit integrierter Notlichtfunktion können jeweils sowohl mit dem ersten Betriebsgerät 11 als auch mit dem zweiten Betriebsgerät 12 gekoppelt sein. Es können separate erste und zweite Betriebsgeräte für unterschiedliche LED-Module 51, 53 mit integrierter Notlichtfunktion vorgesehen sein. Die LED-Module 52, 54 ohne Notlichtfunktion können nur mit dem ersten Betriebsgerät 11 gekoppelt sein, das eine Versorgung im Normalbetrieb sicherstellt. Es können separate erste Betriebsgeräte für unterschiedliche LED-Module 52, 54 vorgesehen sein. Beispielsweise kann jedes der LED-Module mit einem separaten Konverter gekoppelt sein.

FIG. 7 veranschaulicht eine Beleuchtungssituation im Normalbetriebszustand. In den LED-Modulen 51, 53 mit integrierter Notlichtfunktion versorgt der erste Eingang eine Gruppe von LEDs mit Strom, so dass Licht in einem ersten räumlichen Strahlungsmuster abgestrahlt wird. Das Licht kann in Lichtkegeln 61, 63 abgestrahlt werden, die einen ersten Öffnungswinkel 60 aufweisen. Die LED-Module 52, 54 ohne Notlichtfunktion strahlen ebenfalls Licht in dem ersten räumlichen Strahlungsmuster ab. Die LED-Module 52, 54 ohne Notlichtfunktion können Licht in Lichtkegeln 62, 64 abstrahlen, die ebenfalls den ersten Öffnungswinkel 60 aufweisen. Der Abstand zwischen einem LED-Modul 51 mit integrierter Notlichtfunktion und einem benachbarten LED-Modul 52 ohne Notlichtfunktion kann so gewählt sein, dass die auf dem Boden 58 erzeugten Beleuchtungsmuster sich berühren oder überlappen.

FIG. 8 veranschaulicht die Beleuchtungsmuster 71-74 auf dem Boden 58, die von den LED-Modulen 51-54 im Dauerlichtbetrieb erzeugt werden können. Die LED-Module 51, 53 mit integrierter Notlichtfunktion können im Normalbetriebszustand Beleuchtungsmuster 71, 73 auf dem Boden 58 erzeugen, die rotationssymmetrische und im Wesentlichen kreisförmig sind. Die LED-Module 52, 54 ohne Notlichtfunktion können Beleuchtungsmuster 72, 74 auf dem Boden 58 erzeugen, die zu den von den LED-Modulen 51, 53 mit integrierter Notlichtfunktion im Normalbetriebszustand erzeugten Beleuchtungsmustern 72, 74 identisch sind.

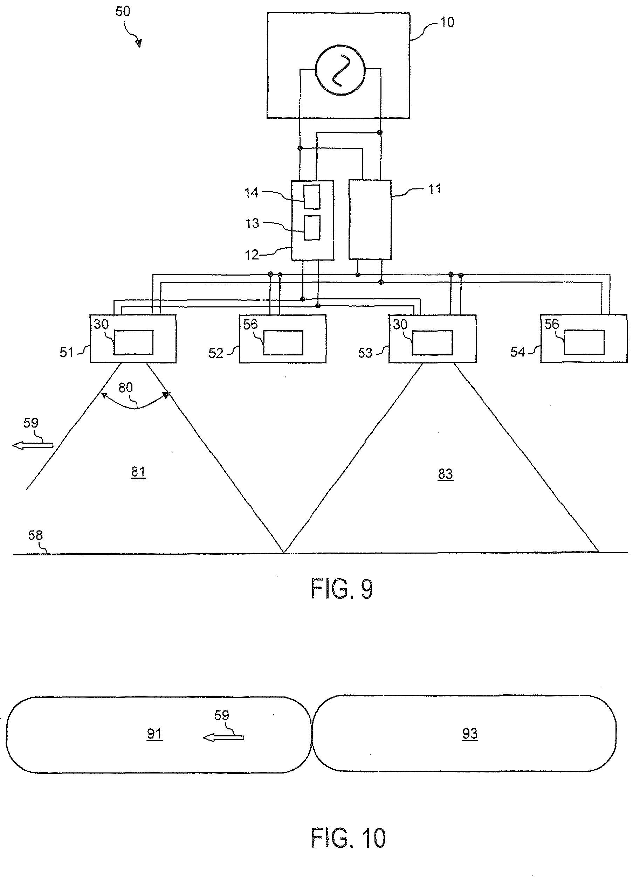

FIG. 9 zeigt das Beleuchtungssystem 50 in dem Notlichtbetriebszustand. Der Notlichtbetriebszustand kann beispielsweise bei einem Ausfall der Netzspannungsquelle 10 und/oder als Antwort auf ein Notfallsignal, das von dem Betriebsgerät 12 empfangen wird, aktiviert werden.

Wenn der Notlichtbetriebszustand aktiviert ist, wird in den LED-Modulen 51, 53 mit integrierter Notlichtfunktion über den zweiten Eingang eine zweite Gruppe von LEDs mit Strom versorgt, so dass Licht in einem zweiten räumlichen Muster abgestrahlt wird. Das Licht kann in räumlichen Strahlungsmustern 81, 83 abgestrahlt werden, die entlang der Richtung 59 des Fluchtwegs einen zweiten Öffnungswinkel 80 aufweisen. Der zweite Öffnungswinkel 80 kann größer als der erste Öffnungswinkel 60 sein, der bei dem in FIG. 7 dargestellten Normalbetriebszustand den Öffnungswinkel des Lichtkegels 61, 63 definiert. Die LED-Module 52, 54 ohne Notlichtfunktion müssen im Notlichtbetriebszustand kein Licht abstrahlen. Der Abstand zwischen einem LED-Modul 51 mit integrierter Notlichtfunktion und einem entlang de Fluchtwegs nächsten LED-Modul 53 mit integrierter Notlichtfunktion kann so gewählt sein, dass die auf dem Boden 58 erzeugten Beleuchtungsmuster sich berühren oder überlappen. Die von dem zweiten Betriebsgerät 12 bereitgestellte Ausgangsleistung kann so gewählt sein, dass entlang des Fluchtwegs eine Beleuchtungsstärke von mindestens 1 lx erreicht wird, auch wenn nur die LED-Module 51, 53 mit integrierter Notlichtfunktion im Notlichtbetriebszustand betrieben werden.

FIG. 10 veranschaulicht die Beleuchtungsmuster 91, 93 auf dem Boden, die von den LED-Modulen 51, 53 mit integrierter Notlichtfunktion im Notlichtbetriebszustand erzeugt werden können. Die LED-Module 51, 53 mit integrierter Notlichtfunktion können im Notlichtbetriebszustand Beleuchtungsmuster 91, 93 auf dem Boden 58 erzeugen, die nicht rotationssymmetrisch sind und in einer ersten Richtung eine längere Abmessung aufweisen als in einer dazu senkrechten zweiten Richtung. Ein Abstand der LED-Module 51, 53 mit integrierter Notlichtfunktion entlang des Fluchtwegs kann so gewählt werden, dass er höchstens der Länge des Beleuchtungsmusters 91, 93 auf dem Boden 58, gemessen entlang der Richtung 59 des Fluchtwegs, entspricht. Der Abstand der LED-Module 51, 53 mit integrierter Notlichtfunktion entlang des Fluchtwegs kann so gewählt werden, dass sich die Beleuchtungsmuster 91, 93, die von den LED-Modulen 51, 53 mit integrierter Notlichtfunktion im Notlichtbetriebszustand erzeugt werden, auf dem Boden 58 berühren oder überlappen.

LED-Module mit integrierter Notlichtfunktion können sowohl in einem Normalbetriebszustand, d.h. für den Dauerlichtbetrieb, als auch für einen Notlichtbetrieb verwendet werden. Durch die Ausgestaltung der LED-Module derart, dass Licht abhängig vom Betriebszustand wahlweise über ein erste oder eine zweite Lichtabstrahlfläche abgegeben und in unterschiedlichen räumlichen Mustern abgestrahlt wird, kann ein Abstand von LED-Modulen mit integrierter Notlichtfunktion vergrößert werden. Eine Kombination mit LED-Modulen ohne Notlichtfunktion ist in einfacher Weise möglich.

Während Ausführungsbeispiele unter Bezugnahme auf die Figuren detailliert beschrieben wurden, können Abwandlungen bei weiteren Ausführungsbeispielen realisiert werden. Beispielsweise muss ein Beleuchtungssystem mit einem LED-Modul mit integrierter Notlichtfunktion nicht notwendig zwei voneinander unabhängige Versorgungsmodule umfassen, um LEDs selektiv zu aktivieren. Während zwei separate Versorgungsmodule vorgesehen sein können, um das LED-Modul im Normalbetriebszustand und im Notlichtbetriebszustand mit Energie zu versorgen, können die Funktionalitäten auch in einem Versorgungsmodul kombiniert sein. Die Steuerung, die im Notlichtbetriebszustand die Stromversorgung des LED-Moduls aus einer Batterie veranlasst, muss nicht in eines der Versorgungsmodule integriert sein, sondern kann auch separat vorgesehen sein. Alternativ oder zusätzlich kann auch die Batterie, die im Notlichtbetriebszustand das LED-Modul mit Energie versorgt, separat von den Versorgungsmodulen vorgesehen sein.

Zusätzliche Funktionen können in das LED-Modul und/oder die Versorgungsmodule integriert sein. Beispielsweise können die Versorgungsmodule eine Logik zur Durchführung eines automatischen Funktionstests und/oder eines Betriebsdauertests aufweisen. Es kann eine Datenschnittstelle zur Protokollierung vorgesehen sein. Alternativ oder zusätzlich kann über eine Signal-LED direkt an dem LED-Modul oder dem Versorgungsmodul der Prüfstatus nach einer Überprüfung der Notlichtfunktion angezeigt werden.

Die LED-Module mit integrierter Notlichtfunktion können für verschiedene Anwendungen eingesetzt werden. Beispielsweise können die LED-Module mit integrierter Notlichtfunktion nicht nur für eine Fluchtwegbeleuchtung eingesetzt werden, sondern auch zur Bereitstellung einer Anti-Panik-Beleuchtung oder einer Ersatzbeleuchtung verwendet werden. Die LED-Module mit integrierter Notlichtfunktion können insbesondere zur Gebäudebeleuchtung eingesetzt werden, ohne darauf beschränkt zu sein.

## Patentansprüche

1. Kombination aus einem LED-Modul mit integrierter Notlichtfunktion und wenigstens einem Betriebsgerät,
wobei das LED-Modul eine Mehrzahl von auf einem gemeinsamen Träger (23) montierten LEDs (30) umfasst,
wobei das LED-Modul zum Anschluss an das wenigstens eine Betriebsgerät (11, 12) eingerichtet ist und die Mehrzahl von LEDs (30) eingerichtet ist, durch das wenigstens eine Betriebsgerät (11, 12) kontrolliert aktiviert zu werden,
wobei das LED-Modul (20; 51, 53) so eingerichtet ist,
dass in einem Normalbetriebszustand eine Gruppe von LEDs (31) aus der Mehrzahl von LEDs (30) durch das wenigstens eine Betriebsgerät (11, 12) aktivierbar ist, um eine Lichtabgabe über eine erste Lichtaustrittsfläche (41) des LED-Moduls (20; 51, 53) zu bewirken,
dass in einem Notlichtbetriebszustand wenigstens ein Teil (33) der zu der Gruppe (31) gehörenden LEDs durch das wenigstens eine Betriebsgerät (11, 12) aktivierbar ist, um eine Lichtabgabe über eine zweite Lichtaustrittsfläche (42) des LED-Moduls (20; 51, 53) zu bewirken, wobei bei Einleitung des Notlichtbetriebszustands ein weiterer Teil (34, 35) der zu der Gruppe (31) gehörenden LEDs nicht mit Strom versorgt wird, so dass die zweite Lichtaustrittsfläche (42) in einer ersten Richtung eine erste Abmessung (43) aufweist und in einer dazu senkrechten zweiten Richtung eine zweite Abmessung (44) aufweist, die kleiner als die erste Abmessung (42) ist, und
wobei die erste Lichtaustrittsfläche (41) und die zweite Lichtaustrittsfläche (42) unterschiedliche Formen aufweisen, wobei die erste Lichtaustrittsfläche (41) in der ersten Richtung eine dritte Abmessung aufweist (45) und in der zweiten Richtung eine vierte Abmessung (46) aufweist, die größer als die zweite Abmessung (44) der zweiten Lichtaustrittsfläche (42) ist,
**dadurch gekennzeichnet,**
**dass** das LED-Modul (20; 51, 53) so eingerichtet ist, dass eine weitere Gruppe von LEDs (36, 37) aus der Mehrzahl von LEDs (30) durch das wenigstens eine Betriebsgerät (11, 12) selektiv nur in dem Notlichtbetriebszustand aktivierbar ist, um eine Lichtabgabe über die zweite Lichtaustrittsfläche (42) des LED-Moduls (20; 51, 53) zu bewirken, wobei die dritte Abmessung (45) der ersten Lichtaustrittsfläche (41) kleiner als die erste Abmessung (43) der zweiten Lichtaustrittsfläche (42) ist.

2. Kombination aus einem LED-Modul und wenigstens einem Betriebsgerät nach einem der vorhergehenden Ansprüche,
wobei das LED-Modul (20; 51, 53) so eingerichtet ist, dass die Mehrzahl von LEDs (30) abhängig von einem Betriebszustand selektiv aktivierbar sind, um in dem Normalbetriebszustand ein rotationssymmetrisches Beleuchtungsmuster (71, 73) abzustrahlen und in dem Notlichtbetriebszustand ein nicht rotationssymmetrisches Beleuchtungsmuster (91, 93) abzustrahlen.

3. Kombination aus einem LED-Modul und wenigstens einem Betriebsgerät nach einem der vorhergehenden Ansprüche,
wobei das LED-Modul umfasst:
einen ersten Eingang (21) zum Aktivieren der Gruppe von LEDs (31) in dem Normalbetriebszustand, um die Lichtabgabe über die erste Lichtaustrittsfläche (41) des LED-Moduls (20; 51, 53) zu bewirken, und
einen zweiten Eingang (22), der von dem ersten Eingang (21) verschieden ist, zum Aktivieren des Teils (33) der zu der Gruppe (31) gehörenden LEDs in dem Notlichtbetriebszustand, um die Lichtabgabe über die zweite Lichtaustrittsfläche (42) des LED-Moduls (20; 51, 53) zu bewirken.

4. Kombination aus einem LED-Modul und wenigstens einem Betriebsgerät nach Anspruch 3,
wobei der erste Eingang (21) mit einem ersten Versorgungsmodul (11) gekoppelt ist und der zweite Eingang (22) mit einem zweiten Versorgungsmodul (12), das von dem ersten Versorgungsmodul (11) verschieden ist, gekoppelt ist.

5. Kombination aus einem LED-Modul und wenigstens einem Betriebsgerät nach Anspruch 4,
wobei das zweite Versorgungsmodul (12) eine Batterie (13) umfasst.

6. Kombination aus einem LED-Modul und wenigstens einem Betriebsgerät nach einem der Ansprüche 3-5,
wobei eine Steuerung (14) eingerichtet ist, um den zweiten Eingang (22) selektiv nur in dem Notlichtbetriebszustand mit Energie zu versorgen.

7. Verfahren zum Betreiben eines LED-Moduls (20; 51, 53) mit integrierter Notlichtfunktion, das eine Mehrzahl von auf einem gemeinsamen Träger (23) montierten LEDs (30) aufweist,
wobei in einem Normalbetriebszustand eine Gruppe von LEDs (31) aus der Mehrzahl von LEDs (30) so aktiviert wird, dass eine Lichtabgabe über eine erste Lichtaustrittsfläche (41) des LED-Moduls (20; 51, 53) erfolgt,
wobei in einem Notlichtbetriebszustand ein Teil (33) der zu der Gruppe (31) gehörenden LEDs so aktiviert wird, dass eine Lichtabgabe über eine zweite Lichtaustrittsfläche (42) des LED-Moduls (20; 51, 53) erfolgt, wobei bei Einleitung des Notlichtbetriebszustands ein weiterer Teil (34, 35) der zu der Gruppe (31) gehörenden LEDs nicht mit Strom versorgt wird, so dass die zweite Lichtaustrittsfläche (42) in einer ersten Richtung eine erste Abmessung (43) aufweist und in einer dazu senkrechten zweiten Richtung eine zweite Abmessung (44) aufweist, die kleiner als die erste Abmessung (43) ist, und
wobei die erste Lichtaustrittsfläche (41) und die zweite Lichtaustrittsfläche (42) unterschiedliche Formen aufweisen, wobei die erste Lichtaustrittsfläche (41) in der ersten Richtung eine dritte Abmessung (45) aufweist und in der zweiten Richtung eine vierte Abmessung (46) aufweist, die größer als die zweite Abmessung (44) der zweiten Lichtaustrittsfläche (42) ist,
**dadurch gekennzeichnet,**
**dass** eine weitere Gruppe von LEDs (36, 37) aus der Mehrzahl von LEDs (30) selektiv nur in dem Notlichtbetriebszustand aktiviert wird, um eine Lichtabgabe über die zweite Lichtaustrittsfläche (42) des LED-Moduls (20; 51, 53) zu bewirken, wobei die dritte Abmessung (45) der ersten Lichtaustrittsfläche kleiner als die erste Abmessung (43) der zweiten Lichtaustrittsfläche (42) ist.

## Claims

1. Combination of an LED module with an integrated emergency light function and at least one operating device,
wherein the LED module comprises a plurality of LEDs (30) mounted on a common carrier (23),
wherein the LED module is configured to connect to the at least one operating device (11, 12) and the plurality of LEDs (30) are configured to be activated in a controlled manner by the at least one operating device (11, 12),
wherein the LED module (20; 51, 53) is configured such that
in a normal operating mode, a group of LEDs (31) from the plurality of LEDs (30) can be activated by the at least one operating device (11, 12), in order to effect a light output via a first light-emitting surface (41) of the LED module (20; 51, 53),
in an emergency light operating mode, at least a part (33) of the LEDs belonging to the group (31) can be activated by the at least one operating device (11, 12), in order to effect a light output via a second light-emitting surface (42) of the LED module (20; 51, 53), wherein when the emergency light operating mode is initiated, a further part (34, 35) of the LEDs belonging to the group (31) is not supplied with power, so that the second light-emitting surface (42) has a first dimension (43) in a first direction and in a second direction perpendicular thereto has a second dimension (44) that is smaller than the first dimension (42), and
wherein the first light-emitting surface (41) and the second light-emitting surface (42) have different shapes, wherein the first light-emitting surface (41) has a third dimension (45) in the first direction and in the second direction has a fourth dimension (46) that is greater than the second dimension (44) of the second light-emitting surface (42),
**characterized in that**
the LED module (20; 51, 53) is configured such that a further group of LEDs (36, 37) of the plurality of LEDs (30) can be selectively activated by the at least one operating device (11, 12) only in the emergency light operating mode, in order to effect a light output via the second light-emitting surface (42) of the LED module (20; 51, 53), wherein the third dimension (45) of the first light-emitting surface (41) is smaller than the first dimension (43) of the second light-emitting surface (42).

2. Combination of an LED module and at least one operating device according to one of the preceding claims,
wherein the LED module (20; 51, 53) is configured such that the plurality of LEDs (30) can be selectively activated as a function of an operating mode, in order to emit a rotationally symmetrical lighting pattern (71, 73) in the normal operating mode and to emit a non-rotationally symmetrical lighting pattern (91, 93) in the emergency light operating mode.

3. Combination of an LED module and at least one operating device according to one of the preceding claims,
wherein the LED module comprises:
a first input (21) for activating the group of LEDs (31) in the normal operating mode, in order to effect the light output via the first light-emitting surface (41) of the LED module (20; 51, 53), and
a second input (22) that is different from the first input (21) for activating in the emergency light operating mode the part (33) of the LEDs belonging to the group (31) in order to effect the light output via the second light-emitting surface (42) of the LED module (20; 51, 53).

4. Combination of an LED module and at least one operating device according to claim 3,
wherein the first input (21) is coupled to a first supply module (11) and the second input (22) is coupled to a second supply module (12) that is different from the first supply module (11).

5. Combination of an LED module and at least one operating device according to claim 4,
wherein the second supply module (12) comprises a battery (13).

6. Combination of an LED module and at least one operating device according to one of claims 3-5,
wherein a controller (14) is configured to selectively supply the second input (22) with energy only in the emergency light operating mode.

7. Method for operating an LED module (20; 51, 53) with an integrated emergency light function, comprising a plurality of LEDs (30) mounted on a common carrier (23),
wherein in a normal operating mode, a group of LEDs (31) of the plurality of LEDs (30) is activated such that a light output takes place via a first light-emitting surface (41) of the LED module (20; 51, 53),
wherein in an emergency light operating mode, a part (33) of the LEDs belonging to the group (31) are activated such that a light output takes place via a second light-emitting surface (42) of the LED module (20; 51, 53), wherein when the emergency light operating mode is initiated, a further part (34, 35) of the LEDs belonging to the group (31) is not supplied with power so that the second light-emitting surface (42) has a first dimension (43) in a first direction and in a second direction perpendicular thereto has a second dimension (44) that is smaller than the first dimension (43), and
wherein the first light-emitting surface (41) and the second light-emitting surface (42) have different shapes, wherein the first light-emitting surface (41) has a third dimension (45) in the first direction and in the second direction has a fourth dimension (46) that is greater than the second dimension (44) of the second light-emitting surface (42),
**characterized in that**
a further group of LEDs (36, 37) of the plurality of LEDs (30) is selectively activated only in the emergency light operating mode in order to effect a light output via the second light-emitting surface (42) of the LED module (20; 51, 53), wherein the third dimension (45) of the first light-emitting surface is smaller than the first dimension (43) of the second light-emitting surface (42).

## Revendications

1. Combinaison d'un module à diodes DEL à fonction éclairage de secours intégrée et d'au moins un appareil de fonctionnement,
dans laquelle le module à diodes DEL comprend une pluralité de DEL (30) montées sur un support commun (23),
dans laquelle le module à diodes DEL est conçu pour un raccordement à l'au moins un appareil de fonctionnement (11, 12) et la pluralité de DEL (30) est conçue pour être activée de manière contrôlée par l'au moins un appareil de fonctionnement (11, 12),
dans laquelle le module à diodes DEL (20 ; 51, 53) est conçu de telle sorte que,
dans un état de fonctionnement normal, un groupe de DEL (31) de la pluralité de DEL (30) puisse être activé par l'au moins un appareil de fonctionnement (11, 12), afin de provoquer une émission de lumière à travers une première surface de sortie de lumière (41) du module à diodes DEL (20 ; 51, 53),
dans un état de fonctionnement éclairage de secours, au moins une partie (33) des DEL appartenant au groupe (31) puisse être activée par l'au moins un appareil de fonctionnement (11, 12), afin de provoquer une émission de lumière à travers une deuxième surface de sortie de lumière (42) du module à diodes DEL (20 ; 51, 53), dans laquelle lors de l'initiation de l'état de fonctionnement éclairage de secours, une autre partie (34, 35) des DEL appartenant au groupe (31) n'est pas alimentée en courant, de sorte que la deuxième surface de sortie de lumière (42) présente, dans une première direction, une première dimension (43) et, dans une deuxième direction perpendiculaire à celle-ci, présente une deuxième dimension (44), qui est plus petite que la première dimension (42) et
dans laquelle la première surface de sortie de lumière (41) et la deuxième surface de sortie de lumière (42) présentent des formes différentes, dans laquelle la première surface de sortie de lumière (41) présente dans la première direction une troisième dimension (45) et présente dans la deuxième direction une quatrième dimension (46), qui est plus grande que la deuxième dimension (44) de la deuxième surface de sortie de lumière (42),
**caractérisée en ce**
**que** le module à diodes DEL (20 ; 51, 53) est conçu pour qu'un autre groupe de DEL (36, 37) de la pluralité de DEL (30) puisse être activé par l'au moins un appareil de fonctionnement (11, 12) de manière sélective uniquement dans l'état de fonctionnement éclairage de secours, afin de provoquer une émission de lumière sur la deuxième surface de sortie de lumière (42) du module à diodes DEL (20 ; 51, 53), dans laquelle la troisième dimension (45) de la première surface de sortie de lumière (41) est plus petite que la première dimension (43) de la deuxième surface de sortie de lumière (42).

2. Combinaison d'un module à diodes DEL et d'au moins un appareil de fonctionnement selon l'une quelconque des revendications précédentes,
dans laquelle le module à diodes DEL (20 ; 51, 53) est conçu de telle sorte que la pluralité de DEL (30) puisse être activée de manière sélective en fonction d'un état de fonctionnement, afin d'irradier un motif d'éclairage symétrique en rotation (71, 73) dans l'état de fonctionnement normal et d'irradier un motif d'éclairage non symétrique en rotation (91, 93) dans l'état de fonctionnement éclairage de secours.

3. Combinaison d'un module à diodes DEL et d'au moins un appareil de fonctionnement selon l'une quelconque des revendications précédentes,
dans laquelle le module à diodes DEL comprend :
une première entrée (21) pour activer le groupe de DEL (31) dans l'état de fonctionnement normal, afin de provoquer l'émission de lumière à travers la première surface de sortie de lumière (41) du module à diodes DEL (20 ; 51, 53) et
une deuxième entrée (22), qui est différente de la première entrée (21), pour activer la partie (33) des DEL appartenant au groupe (31) dans l'état de fonctionnement éclairage de secours, afin de provoquer l'émission de lumière à travers la deuxième surface de sortie de lumière (42) du module à diodes DEL (20 ; 51, 53).

4. Combinaison d'un module à diodes DEL et d'au moins un appareil de fonctionnement selon la revendication 3,
dans laquelle la première entrée (21) est accouplée à un premier module d'alimentation (11) et la deuxième entrée (22) est accouplée à un deuxième module d'alimentation (12), qui est différent du premier module d'alimentation (11).

5. Combinaison d'un module à diodes DEL et d'au moins un appareil de fonctionnement selon la revendication 4,
dans laquelle le deuxième module d'alimentation (12) comprend une batterie (13).

6. Combinaison d'un module à diodes DEL et d'au moins un appareil de fonctionnement selon l'une quelconque des revendications 3-5,
dans laquelle une commande (14) est conçue pour alimenter la deuxième entrée (22) en énergie de manière sélective uniquement dans l'état de fonctionnement éclairage de secours.

7. Procédé de fonctionnement d'un module à diodes DEL (20 ; 51, 53) à fonction éclairage de secours intégrée, qui présente une pluralité de DEL (30) montées sur un support commun (23),
dans lequel, dans un état de fonctionnement normal, un groupe de DEL (31) de la pluralité de DEL (30) est activé de manière à provoquer une émission de lumière à travers une première surface de sortie de lumière (41) du module à diodes DEL (20 ; 51, 53),
dans lequel, dans un état de fonctionnement éclairage de secours, une partie (33) des DEL appartenant au groupe (31) est activée de manière à provoquer une émission de lumière à travers une deuxième surface de sortie de lumière (42) du module à diodes DEL (20 ; 51, 53), dans lequel lors de l'initiation de l'état de fonctionnement éclairage de secours, une autre partie (34, 35) des DEL appartenant au groupe (31) n'est pas alimentée en courant, de sorte que la deuxième surface de sortie de lumière (42) présente, dans une première direction, une première dimension (43) et, dans une deuxième direction perpendiculaire à celle-ci, présente une deuxième dimension (44), qui est plus petite que la première dimension (43) et
dans lequel la première surface de sortie de lumière (41) et la deuxième surface de sortie de lumière (42) présentent des formes différentes, dans lequel la première surface de sortie de lumière (41) présente dans la première direction une troisième dimension (45) et présente dans la deuxième direction une quatrième dimension (46), qui est plus grande que la deuxième dimension (44) de la deuxième surface de sortie de lumière (42),
**caractérisé en ce**
**qu**'un autre groupe de DEL (36, 37) de la pluralité de DEL (30) est activé de manière sélective uniquement dans l'état de fonctionnement éclairage de secours, afin de provoquer une émission de lumière à travesr la deuxième surface de sortie de lumière (42) du module à diodes DEL (20 ; 51, 53), dans lequel la troisième dimension (45) de la première surface de sortie de lumière est plus petite que la première dimension (43) de la deuxième surface de sortie de lumière (42).
